# FASCICULE DE BREVET EUROPEEN

(11) **EP 0 895 973 B1**
(45) Date de publication et mention de la délivrance du brevet: **21.11.2001**
(21) Numéro de dépôt: 98402000.8
(22) Date de dépôt: 06.08.1998
(51) Int. Cl.: C04B 35/107, C03B 5/43

(54) **Matériau réfractaire constitué d'alumine bêta**
Feuerfestes Material aus beta-Aluminiumoxid
Refractory material of beta-alumina

(30) Priorité: 08.08.1997 FR 9710196
(43) Date de publication de la demande: 10.02.1999
(73) Titulaire: SOCIETE EUROPEENNE DES PRODUITS REFRACTAIRES, F-92400 Courbevoie (FR)
(72) Inventeur: Zanoli, Alain Paul Bernard, 84000 Avignon (FR); Boussant-Roux, Yves, 84000 Avignon (FR)
(74) Mandataire: Colas, Jean-Pierre

(56) Documents cités:
- FR-A- 2 739 617
- GB-A- 455 236
- US-A- 2 043 029

## Description

L'invention concerne un nouveau matériau réfractaire fondu et coulé formé d'alumine β qui convient tout particulièrement, entre autres applications, à la réalisation de superstructures de fours de verrerie.

Des matériaux réfractaires fondus et coulés d'alumine β sont connus depuis longtemps. US-A-2043029 décrit des matériaux contenant de l'alumine et 1-10% d'oxyde de sodium et indique qu'environ 5% de Na₂O suffisent pour obtenir un matériau essentiellement formé d'alumine β, et qu'il faut éviter la présence de plus de 1% de silice et de dioxyde de titane car ceux-ci gênent la formation d'alumine β. US-A-2043029 ne décrit pas spécifiquement de matériaux contenant plus de 5% de Na₂O, ni ne suggère que de tels matériaux puissent présenter un avantage particulier.

SU-A-391 103 propose l'ajout de sodium sous forme d'aluminate NaAlO₂ (1 à 15%) dans le but d'éviter la volatilisation des composés du sodium. Ce brevet russe ne décrit pas spécifiquement de produit avec une teneur en Na₂O supérieure à 7,04% et ne donne aucune indication concernant l'effet de la composition sur les caractéristiques du produit.

Selon le brevet FR-A-2739617 l'ajout de BaO, SrO et CaO à des produits dont la somme NaO+K₂O varie entre 4 et 7% permet d'améliorer la résistance à la compression.

Dans la pratique, tous les matériaux d'alumine β disponibles dans le commerce, tels que le Monofrax H fabriqué par la société américaine Monofrax® Company ou par la société japonaise Toshiba Refractories, le Marsnite® fabriqué par la société japonaise Asahi ou le Jargal® H fabriqué par la Demanderesse ont, à l'analyse, des compositions très voisines, à savoir de 93 à 94,6 % de Al₂O₃, de 5,2 à 7% de Na₂O et de 0,1 à 0,3% de silice et d'autres oxydes (à titre d'impuretés ou d'additions volontaires).

On trouve également dans le commerce d'autres produits d'alumine β dont la quantité en oxyde de sodium atteint 6,7% mais dont la teneur en dioxyde de silicium est inférieure à 0,05% et, d'autre part, un produit vendu par la Demanderesse sous l'appellation ER.5312, dit d'alumine β''', composé en poids de 86,5 à 87,5% d'oxyde d'aluminium, de 4,5% d'oxyde de sodium et de 8% d'oxyde de magnésium et de petites quantités d'autres oxydes, notamment de l'ordre de 0,30% de dioxyde de silicium. Tous ces produits sont quasiment dépourvus de corindon ou alumine α (moins de 3-4% et typiquement au maximum 2% dans le Jargal H).

Les matériaux d'alumine β ont une résistance importante aux chocs thermiques ainsi qu'aux sollicitations mécaniques à chaud. Ces propriétés les rendent bien adaptés à l'utilisation en superstructure dans le laboratoire de fusion des fours de verrerie. Cependant, les matériaux d'alumine β souffrent d'une certaine fragilité. De ce fait, les opérations d'usinage ou de découpe des blocs fondus sont difficiles et coûteuses du fait des rebuts générés. D'autre part, les différentes manipulations que subissent les blocs lors du procédé de fabrication et la phase de montage du four peuvent donner lieu à des ébréchures d'arêtes ou à l'endommagement de coins. L'absence de matière même très localisée dans un bloc de superstructure peut entraîner un risque de corrosion accélérée du matériau liée à la présence de dépôts de matières corrosives émanant de verre ou simplement à une augmentation de la surface de corrosion du bloc.

De plus, l'endommagement des blocs au cours de leur fabrication entraîne un surcoût du produit par une diminution du rendement de fabrication. Ce problème limite les solutions conceptrices, car, en superstructures, le besoin existe en général plus qu'ailleurs de pièces possédant des arêtes très prononcées.

Par ailleurs, l'évolution des techniques de fusion du verre va globalement vers des conditions plus sévères dans lesquelles les matériaux constituant le four sont plus sollicités et c'est le cas en particulier avec le développement de la combustion oxy-gaz.

Pour répondre à la nécessité d'intégrité des montages, plus pressante que par le passé, notamment au niveau des joints, et contribuer à l'évolution actuelle de la géométrie des superstructures, il existe un besoin pour des produits fondus et coulés constitués principalement d'alumine β ayant des caractéristiques mécaniques améliorées.

L'objet de l'invention est donc de fournir un nouveau produit d'alumine β présentant une fragilité moindre tout en conservant les propriétés de résistance aux chocs thermiques, et aux sollicitations mécaniques à chaud reconnues pour les matériaux d'alumine β actuels.

Par ailleurs nous avons trouvé que les modifications apportées pour réduire la fragilité nous permettent également d'obtenir un produit moins sensible à l'hydratation et dont la réactivité au contact des matériaux AZS et siliceux ainsi qu'au contact de volages constitués principalement de silice est améliorée.

Plus particulièrement, la présente invention concerne un nouveau matériau réfractaire fondu et coulé essentiellement constitué d'alumine β, caractérisé en ce qu'il présente, à l'analyse, la composition chimique suivante, en pourcentage molaire :
11,25% à 15,45% d'au moins un oxyde de métal alcalin choisi dans le groupe formé par Na₂O, Li₂O et K₂O avec la condition que Na₂O représente au moins 9,3%,
0 à 2,97% de SiO₂,
81,38 à 88,75% de Al₂O₃ et au plus 0,2% d'impuretés, et dans lequel l'alumine β représente au moins 98% des phases cristallisées.

De préférence l'oxyde de métal alcalin est essentiellement constitué de Na₂O et la composition chimique analysée du matériau de l'invention est la suivante, en % en poids :
7,25% à 10% de Na₂O,
0 à 1,85% de SiO₂,
87,95 à 92,75% de Al₂O₃, et au plus 0,2% d'impuretés,

De préférence également la composition chimique pondérale analysée du matériau de l'invention est la suivante :
7,3 à 8,8% de Na₂O,
0,4 à 1,65% de SiO₂,
89,35 à 92,3% de Al₂O₃, et au plus 0,2% d'impuretés.

On préfère tout particulièrement que le matériau de l'invention ait la composition analysée suivante, en % en poids :
7,4 à 8,5% de Na₂O,
0,7 à 1,45% de SiO₂,
89,85 à 91,9% de Al₂O₃, et au plus 0,2% d'impuretés.

Les impuretés, qui ne sont pas introduites volontairement, proviennent des matières premières et sont principalement formées des oxydes de Fe et de Ti.

De façon surprenante, il a été constaté que l'augmentation de la teneur en oxyde de sodium au dessus d'une valeur seuil de 7,25 % confère à ces nouveaux produits d'alumine β des caractéristiques améliorées sans dégrader les propriétés fondamentales reconnues de ce type de produits.

Des essais de sondage ont montré qu'en pratique la teneur maximale en Na₂O doit être limitée à environ 10%. En effet, au-delà de 10%, la température d'affaissement sous charge diminue significativement.

De même, la teneur en Na₂O ne doit pas descendre en dessous de 7,25% pour l'obtention de matériaux avec des propriétés mécaniques significativement améliorées.

Nous avons par ailleurs mis en évidence l'intérêt des produits pour lesquels Na₂O est partiellement remplacé par une quantité molaire équivalente de Li₂O ou K₂O.

On pense que ces améliorations sont liées d'une part à une diminution de la porosité intergranulaire et d'autre part à un renforcement mécanique du grain d'alumine β lié à une évolution cristallographique de l'alumine β.

Par alumine β on entend ici un ensemble de composés issus du système Al₂O₃- Na₂O pour lesquels Na₂O peut être remplacé par un autre oxyde alcalin ou alcalino-terreux.

La production des nouveaux matériaux fondus et coulés d'alumine β de l'invention peut s'effectuer de façon classique en fondant les matières premières dans les proportions adéquates, puis en coulant le mélange fondu soit en vrac pour obtenir un produit granulaire qui pourra être réaggloméré par pressage ou utilisé comme constituant principal d'un béton ou pisé ; soit dans des moules afin d'obtenir directement des pièces de forme. La fusion étant habituellement réalisée dans un four à arc électrique les matériaux sont souvent appelés "électrofondus". Ce dernier terme est considéré être englobé dans l'expression "fondu et coulé".

On a préparé des pièces diverses de format industriel par coulée dans des moules en graphite de mélanges fondus de Al₂O₃, Na₂O et SiO₂ soit dans un four monophasé à arc de laboratoire de 600 KVA, soit dans un four industriel triphasé à arc de 3000 KVA, en utilisant la technique de fusion dite "en arc" enseignée dans le brevet français 1. 208. 577.

L'analyse chimique des matériaux en ce qui concerne Na₂O et SiO₂ est donnée dans le tableau 1, Al₂O₃ et les impuretés (inférieures à 0,2%) constituent le reste de la composition. Le matériau N°5 est un matériau de référence se situant en dehors du cadre de l'invention, il s'agit d'un matériau d'alumine β disponible dans le commerce.

Le tableau 3 donne les compositions des produits pour lesquels Na₂O est partiellement remplacé par une quantité molaire équivalente de Li₂O ou K₂O.

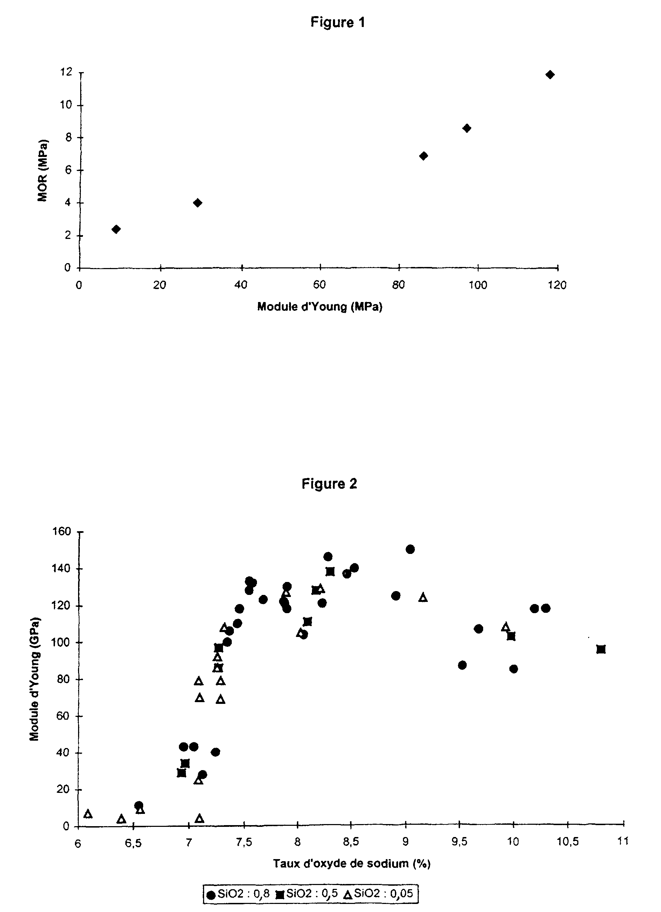

La description qui va suivre, faite en se référant aux graphiques annexés, fera bien comprendre l'invention. La figure 1 est un graphique montrant la corrélation entre le module d'Young et le MOR de différents produits. La figure 2 est un graphique montrant les variations des propriétés mécaniques en fonction de la composition du matériau.

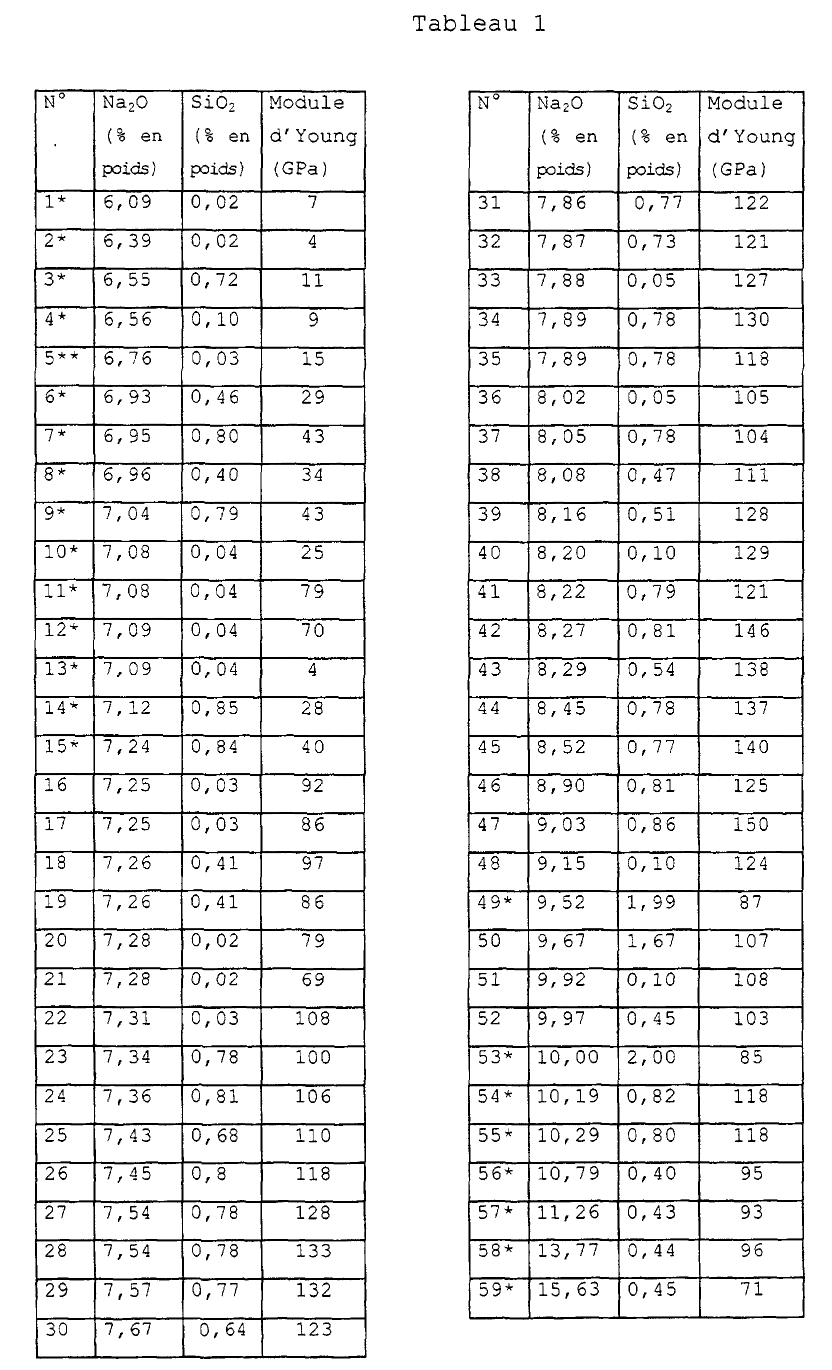

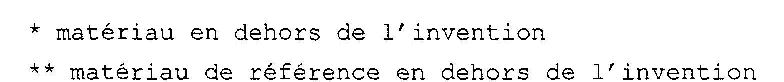

On va maintenant passer en revue les différentes améliorations de propriétés présentées par les matériaux de l'invention et tenter d'en expliquer les raisons. Il va de soi, cependant, que la Demanderesse n'entend pas lier l'invention à une théorie quelconque et que les explications présentées ne le sont qu'à titre indicatif.

### A ) Diminution de la fragilité

Partant du problème de fragilité des blocs lors de l'usinage et des manipulations diverses, nous avons cherché quelle caractéristique physique nous permettrait le mieux de mettre ce phénomène en évidence et en particulier de mesurer les effets de l'évolution de la composition chimique.

Il est bien connu de l'homme de l'art que la caractéristique importante pour les produits placés dans les voûtes des fours de fusion du verre est la résistance au fluage. Nous vérifierons par la suite que cette propriété est conservée par les produits de l'invention mais ce n'est pas celle qui correspond au problème posé de fragilité des arrêtes et des coins. Par ailleurs, la résistance à la compression ne présente pas d'intérêt particulier pour caractériser les matériaux dans ce contexte. Par contre il est connu que la caractéristique permettant d'évaluer le potentiel d'un matériau à présenter des arrêtes et coins cassés est la résistance à la flexion.

Le module de rupture ou MOR est la contrainte à la rupture en flexion trois points d'éprouvettes de dimensions 25x25x150mm. Le module d'élasticité ou module d'Young est un module dynamique mesuré par fréquence de résonance en propagation d'ondes transversales dans ces mêmes éprouvettes. Le MOR et le module d'Young sont liés par la relation suivante issue de l'analyse de Griffith Irwin Orowan : MOR = (Eγ/4c)^{1/2} où E est le module d'Young, γ l'énergie de surface et 2c la longueur de la dimension principale du défaut. Nous avons vérifié grâce à quelques points donnés dans le tableau 2 que nous avions une bonne corrélation entre le MOR et le module d'Young.

**Tableau 2**

| N° | Na₂O (% en poids) | SiO₂ (% en poids ) | module d' Young (GPa) | MOR (MPa ) |
|---|---|---|---|---|
| 4* | 6,56 | 0,10 | 9 | 2,4 |
| 6* | 6,93 | 0,46 | 29 | 4,0 |
| 18 | 7,26 | 0,41 | 97 | 8,6 |
| 19 | 7,26 | 0,41 | 86 | 6,9 |
| 26 | 7,45 | 0,80 | 118 | 11,9 |

Sur la figure 1 on constate que les deux grandeurs sont bien corrélées et on peut donc évaluer le comportement en flexion des produits en mesurant leur module d'Young ou leur MOR.

La mesure du module d'Young étant plus facile à mettre en oeuvre, nous avons choisi cette grandeur pour illustrer les caractéristiques mécaniques des différents produits.

Le tableau 1 donne les valeurs du module d'Young de tous les produits que nous avons fabriqués et la figure 2 montre l'évolution du module d'Young pour des teneurs en oxyde de sodium et de silice variables. Les résultats présentés sont, pour chaque point, des moyennes de 6 mesures correspondant à 6 échantillons prélevés dans un même bloc.

Cette courbe montre qu'à partir d'un taux de Na₂O d'environ 7,5%, on multiplie le module d'Young par un facteur d'au moins 5 par rapport au matériau N°5 de référence. L'augmentation des caractéristiques mécaniques est significative à partir d'une teneur en oxyde de sodium supérieure ou égale à 7,25%.

On peut remarquer que dès que le taux d'oxyde de sodium atteint 7% on peut avoir des résultats corrects mais les exemples 10* à 13* nous montrent bien que dans cette zone de transition les résultats obtenus sont aléatoires. Par contre, à partir d'un taux de 7,25% d'oxyde de sodium, on constate que l'amélioration est réelle et que les résultats sont reproductibles (exemples 16 à 21). Pour cette raison nous retiendrons la valeur de 7,25% d'oxyde de sodium comme étant la limite à partir de laquelle les caractéristiques mécaniques des produits sont nettement améliorées.

Par ailleurs, on constate sur cette courbe que la teneur en silice n'influe pas de façon significative sur l'évolution des propriétés mécaniques des produits. Les teneurs en silice des produits testés varient de 0 à 2%.

D'autre part nous avons réalisé plusieurs produits dans lesquels Na₂O est partiellement remplacé par Li₂O et K₂O. Les produits identifiés précédemment comme étant dans le cadre de l'invention présente un pourcentage molaire d'oxyde de sodium pouvant varier entre 11,25% et 15,45%. C'est dans cette gamme là que nous avons travailler pour vérifier que lorsque la somme des pourcentages molaires de Na₂O + Li₂O + K₂O se situe entre 11,25% et 15,45% on obtient des produits aux caractéristiques mécaniques améliorées. Les résultats sont réunis dans le tableau 3 qui présente les compositions massiques et molaires des produits ; dans les deux cas, le complément est de l'alumine.

**Tableau 3**

| N° | Pourcentages massiques | | | | Pourcentages molaires | | | | Module d'Young (GPa) |
|---|---|---|---|---|---|---|---|---|---|
| | Na₂O | SiO₂ | Li₂O | K₂O | Na₂O | Li₂O | K₂O | Na₂O+Li₂O+ K₂O | |
| 5** | 6,76 | 0,03 | 0 | 0 | 10,65 | 0 | 0 | 10,65 | 15 |
| 22 | 7,31 | 0,03 | 0 | 0 | 11,48 | 0 | 0 | 11,48 | 108 |
| 40 | 8,20 | 0,10 | 0 | 0 | 12,80 | 0 | 0 | 12,80 | 129 |
| 60 | 6,35 | 0,05 | 0,50 | 0 | 9,93 | 1,62 | 0 | 11,55 | 122 |
| 61 | 6,36 | 0,05 | 1,17 | 0 | 9,78 | 3,73 | 0 | 13,51 | 112 |
| 62 | 6,97 | 0,01 | 1,10 | 0 | 10,70 | 3,50 | 0 | 14,20 | 147 |
| 63 | 6,99 | 0,01 | 1,12 | 0 | 10,73 | 3,57 | 0 | 14,30 | 129 |
| 64 | 7,98 | 0,01 | 0,92 | 0 | 12,24 | 2,93 | 0 | 15,17 | 109 |
| 65 | 6,57 | 0,05 | 0 | 1,05 | 10,35 | 0 | 1,09 | 11,44 | 117 |
| 66 | 6,36 | 0,05 | 0 | 0,50 | 9,93 | 0 | 1,62 | 11,55 | 113 |
| 67 | 6,90 | 0,05 | 0 | 1,05 | 10,85 | 0 | 1,09 | 11,94 | 123 |
| 68 | 7,20 | 0,03 | 0 | 1,20 | 11,31 | 0 | 1,24 | 12,55 | 129 |
| 69 | 7,60 | 0,05 | 0 | 1,05 | 11,90 | 0 | 1,08 | 12,98 | 131 |
| 70 | 8,20 | 0,01 | 0 | 1,24 | 12,80 | 0 | 1,28 | 14,08 | 125 |

On constate qu'en substituant une partie de Na₂O par Li₂O ou K₂O, on obtient des produits qui se situent dans le cadre de l'invention pourvu que la somme des pourcentages molaires de Na₂O + Li₂O + K₂O se situe entre 11,25% et 15,45%. A noter que les produits avec un taux massique de Na₂O inférieur à 6% n'ont pas été étudiés car ils ne présentent pas d'intérêt du point de vue économique.

Sur le plan pratique, on peut noter un renforcement par rapport aux produits ayant les compositions de l'art antérieur. Ce renforcement se traduit par une diminution de la sensibilité du produit à l'ébréchage des arêtes et à la casse des coins rencontrés couramment lors de la sortie du moule, après sciage ou encore lors des phases de manipulation des blocs (montage des fours). De plus, les produits selon l'invention ont, d'une façon générale, un meilleur aspect extérieur.

En résumé, une quantité suffisante d'oxyde de sodium éventuellement accompagné d'oxyde de lithium ou de potassium permet de diminuer la fragilité du matériau.

### B) Diminution de la dégradabilité à l'eau

Il est important de connaître le comportement à l'humidité des produits d'alumine β. En effet, on constate, en pratique, que, lorsqu'ils sont soumis à des conditions d'humidité importantes comme celles qui sont rencontrées lors de stockages extérieurs prolongés, les matériaux d'alumine β tendent à perdre leur cohésion mécanique, la dégradation pouvant aller jusqu'au morcellement complet du produit. De même, lors du montage du four, on utilise des ciments qui nécessitent à leur tour l'utilisation d'eau qui, lorsqu'elle s'évapore, peut venir affaiblir les matériaux qui nous intéressent.

Afin de mettre en évidence l'influence de la nouvelle composition sur la dégradabilité à l'eau, nous avons plongé des échantillons prélevés au voisinage de la surface des blocs (180×180×180mm) dans de l'eau à température ambiante. On étudie alors l'évolution des propriétés mécaniques du matériau en mesurant le module d'Young. Nous avons faits ces essais pour des produits en dehors de l'invention (avec un pourcentage de Na₂O aux environs de 7) et pour des produits selon l'invention (Na₂O égal à environ 8%) et ce pour différents pourcentages de silice. Le tableau 4 regroupe les différents résultats.

**Tableau 4**

| N° | Na₂O (%) | SiO₂ (%) | module d'Young avant essai (GPa) | module d'Young après 24h dans l'eau (GPa) (pourcentage de perte) | module d'Young après 68h dans l'eau (GPa) (pourcentage de perte) |
|---|---|---|---|---|---|
| 6* | 6,93 | 0,46 | 29 | 11 (62%) | 6 (73,3%) |
| 7* | 6,95 | 0,80 | 43 | 41 (4,6%) | 29 (32,6%) |
| 10* | 7,08 | 0,04 | 25 | 22 (12%) | 12 (52%) |
| 36 | 8,02 | 0,05 | 105 | 96 (8,6%) | 60 (42,8%) |
| 37 | 8,05 | 0,78 | 104 | 102 (1,9%) | 94 (9,6%) |
| 39 | 8,16 | 0,51 | 128 | 115 (10,1%) | 100 (21,9%) |

Une baisse significative du module d'Young indique que l'humidité a affecté les joints de grains et le grain d'alumine β lui même et doit être considérée comme symptomatique d'une dégradation du matériau.

On remarque qu'avec les matériaux selon l'invention on obtient des valeurs très correctes pour le module d'Young après une hydratation prolongée et ce quel que soit le taux de silice. Ceci est dû à des valeurs initiales plus importantes mais aussi à un plus faible pourcentage de perte. On observe néanmoins que pour des taux de silice relativement importants, la dégradation du matériau est nettement diminuée. L'augmentation de la teneur en silice permet donc d'améliorer significativement la résistance à l'hydratation des blocs.

### C) Diminution de la réactivité vis-à-vis des AZS et des volages constitués de silice

Dans la constitution de la superstructure d'un four de verrerie, le produit constitué d'alumine β est habituellement en contact avec des produits de type AZS, puisque dans la plupart des cas la zone située en amont du four est constituée de produits de type AZS. D'autre part, les produits d'alumine β sont en général surplombés par des réfractaires de silice, notamment ceux constituant la voûte du laboratoire de fusion des fours. Il peut arriver que ces réfractaires, du fait de l'attaque qu'ils subissent, engendrent des écoulements riches en silice qui peuvent entrer en contact avec les produits d'alumine β.

L'expérience industrielle ainsi que les essais de laboratoire montrent que lorsque ces différents matériaux séjournent au contact les uns des autres à haute température une réaction se produit : les constituants de l'AZS ainsi que la silice pénètrent le produit d'alumine β entraînant une décohésion locale du produit associé à une coloration jaunâtre due à la pénétration de zircone.

Des tests de comportement en atmosphère sodique à 1550°C ont été menés avec différents produits. Le matériau testé tenait le rôle de couvercle du creuset en ER1711 (produit AZS de la Demanderesse), ce dernier contenant du sulfate de sodium fondu à 1100°C. L'ensemble du dispositif est porté à 1550°C pendant 72 heures. Un échantillon prélevé de façon identique au centre de tous les matériaux testés fait ensuite l'objet de caractérisations particulières.

Ainsi pour juger du comportement d'un matériau par rapport à un autre nous comparerons les teneurs en oxyde de sodium et silice analysées dans les différents produits. En effet cette analyse permet d'avoir une estimation de la potentialité du produit à résister à une diffusion de ces éléments depuis le creuset jusque dans le matériau en alumine β. Les résultats sont présentés dans le tableau 5.

**Tableau 5**

| N° | Na₂O avant essai (%) | Na₂O après essai (%) | évolution de Na₂O (%) | SiO₂ avant essai (%) | SiO₂ après essai (%) | augmentation de SiO₂ (%) |
|---|---|---|---|---|---|---|
| 1* | 6,09 | 7,48 | +23 | 0,02 | 0,34 | 1600 |
| 26 | 7,45 | 7,36 | -1 | 0,80 | 0,80 | 0 |
| 30 | 7,67 | 8,17 | +6 | 0,64 | 0,64 | 0 |
| 40 | 8,20 | 7,79 | -5 | 0,10 | 0,20 | 100 |
| 51 | 9,92 | 9,36 | -3 | 0,10 | 0,22 | 120 |

Les produits de l'invention, quel que soit le taux de silice, présentent donc un comportement satisfaisant en atmosphère sodique et sont moins sensibles à la diffusion de l'oxyde de sodium et de la silice. En particulier lorsqu'on introduit de la silice dans le matériau on réduit le gradient de concentration entre le matériau testé et le creuset AZS et on a ainsi une moindre pénétration de la silice.

Par ailleurs le fait de diminuer la réactivité des produits d'alumine β vis-à-vis de la silice, peut permettre de disposer d'un matériau à base d'alumine β significativement moins sensible aux volages de silice. En effet pour certains types de verres il peut s'avérer très intéressant de réduire la proportion de matériaux AZS disposés à proximité des zones d'enfournement des matières vitrifiables au profit de matériaux constitués d'alumine β. Cette évolution pourra donner lieu à une diminution des défauts issus de la corrosion en phase vapeur des produits AZS.

### D) Conservation des propriétés des produits d'alumine β

Nous avons vérifié que les produits de l'invention conservent les propriétés reconnues pour les produits d'alumine β : résistance aux chocs thermiques et aux sollicitations mécaniques à chaud. Pour cela, nous avons effectué différents types d'essais sur des produits de l'art antérieur ainsi que sur des produits selon l'invention.

Pour étudier la résistance des produits aux chocs thermiques nous avons soumis des échantillons de produits à étudier (25x25x75mm) à 25 cycles thermiques identiques : 15mn dans un four à 1200°C puis 15mn à température ambiante.

Nous avons également fait subir aux échantillons un test de fracturation en mur. Dans ce test, la grande face des échantillons (50x50x100mm) est soumise à un cycle thermique (1h à 900°C puis 1h à 1500°C), alors que l'autre face est exposée à l'air à température ambiante. En plus du cyclage thermique en face chaude, le produit est donc soumis à un gradient de température. Les conditions thermiques de ce test simulent la situation dans laquelle sont placés les blocs au sein de la superstructure d'un four de verrerie puisque, dans la plupart des cas, les produits d'alumine β sont utilisés dans la zone des brûleurs et sont de ce fait soumis à des variations de températures sur la face chaude en relation avec le passage alterné des fumées de combustion sortant du four et de l'air comburant venant des régénérateurs y pénétrant.

Pour ces deux tests, quelle que soit la teneur en oxyde de sodium et/ou en silice, nous avons observé un comportement similaire pour tous les produits.

Pour évaluer le résistance aux sollicitations mécaniques à chaud nous avons mis en oeuvre des tests d'affaissement sous charge et de fluage.

En effet, dans le cadre du fonctionnement d'un four de verrerie, les blocs de superstructures sont soumis à des efforts mécaniques à haute température. Parfois, notamment lorsque les blocs sont assemblés pour former des arcs ou des voûtes, les efforts de compression sont tels qu'on peut craindre le fluage du matériau.

Il convient de vérifier que la résistance aux sollicitations mécaniques à chaud n'est pas affectée par l'augmentation du taux d'oxyde de sodium pour des taux de silice variables.

Lors du test d'affaissement sous charge, une contrainte de compression de 2 kg/cm² est appliquée sur des échantillons du produit à étudier (diamètre 50mm, hauteur 50 mm) et la température d'affaissement du matériau est enregistrée. Les résultats sont présentés dans le tableau 6.

**Tableau 6**

| N° | Na₂O(%) | SiO₂ (%) | Température d'affaissement (°C) |
|---|---|---|---|
| 43 | 8,29 | 0,54 | >1700 |
| 49* | 9,52 | 1,99 | 1620 |
| 52 | 9,97 | 0,45 | >1700 |
| 53* | 10,00 | 2,00 | 1600 |
| 56* | 10,79 | 0,40 | 1630 |
| 58* | 13,77 | 0,44 | 1600 |

Nous avons constaté que pour les produits de l'invention aussi bien que pour les produits de l'art antérieur la température d'affaissement est supérieure à 1630°C. Ce n'est que pour des teneurs en oxyde de sodium supérieures à 10% que l'on note une diminution de la température d'affaissement. Nous limiterons donc les teneurs en oxyde de sodium à 10%. De même, pour des teneurs en silice supérieures (exemples 49* et 53*) à 1,9% on note une diminution de la température d'affaissement. Cette évolution est liée à l'augmentation du volume de phase silicatée et pour cette raison les produits de l'invention ne doivent pas contenir plus de 1,85% de silice.

Pour évaluer la résistance au fluage, une charge de 5 kg/cm2 est appliquée sur des échantillons de produits à étudier (diamètre 50mm, hauteur 50mm) et on mesure la vitesse de fluage du matériau pendant 100h à une température de 1550°C.

La température de l'essai a été choisie pour simuler le comportement des produits dans une situation industrielle qui est la plus dure qui puisse être rencontrée du point de vue mécanique : la contrainte de 5 kg/cm² correspond à une voûte de 5m de portée et d'un angle de 60°.

Les essais réalisés n'ont pas permis de détecter un comportement différent des nouveaux produits par rapport aux produits de l'art antérieur.

### E) Commentaires sur les mécanismes d'amélioration des produits d'alumine β

Des études cristallographiques et microscopiques réalisées par diffraction X et grâce à une microsonde ont permis de mettre en évidence que l'ajout d'oxyde de sodium dans les proportions indiquées dans les matériaux d'alumine β a pour conséquences :
- une diminution de la porosité
- une évolution de la microstructure se traduisant par l'existence d'une phase interstitielle jouant un rôle de ciment entre les grains d'alumine β, une augmentation de la teneur en oxyde de sodium dans les grains d'alumine β (NaAl₁₁O₁₇) et l'apparition d'une phase d'alumine β très riche en oxyde de sodium appelée alumine β' (NaAl₇O₁₁).

Le tableau 7 permet de mettre en évidence l'évolution de porosité pour différents types de produits d'alumine β :

**Tableau 7**

| N° | Na₂O (%) | SiO₂ (%) | Porosité (%) |
|---|---|---|---|
| 4* | 6,56 | 0,10 | 20,9 |
| 32 | 7,87 | 0,73 | 4,5 |
| 40 | 8,2 | 0,10 | 7,5 |

On constate que les produits selon l'invention ont une porosité moindre. Il est clair que la diminution de la porosité intergranulaire sera un facteur du renforcement mécanique du produit en permettant un meilleur contact des grains d'alumine β entre eux. En effet la présence de porosités entre les grains d'alumine β tend à favoriser, lorsque le matériau est soumis à un effort, la propagation d'une fissure le long des joints de grains.

L'influence de l'augmentation du taux d'oxyde de sodium sur la microstructure des produits d'alumine β a été étudié par microsonde et diffraction X. En particulier nous avons étudié l'influence de l'ajout d'oxyde de sodium en présence ou l'absence de silice.

Des mesures réalisées à l'aide de la microsonde permettent d'évaluer la teneur moyenne en oxyde de sodium dans les grains d'alumine β. Cette étude nous a permis de mettre en évidence que grâce à l'ajout d'oxyde de sodium en présence ou non de silice on a un enrichissement en oxyde de sodium dans les grains d'alumine β, par rapport aux matériaux en dehors de l'invention.

Par ailleurs on constate dans le tableau 8 que lorsque la teneur en oxyde de sodium est supérieure à 7,25% il apparaît une phase d'alumine β plus riche en oxyde de sodium décelable par diffraction X. Il s'agit de la phase alumine β' NaAl₇O₁₁. Le tableau 8 permet aussi de montrer que lorsque la teneur en oxyde de sodium augmente une partie du surplus en oxyde de sodium contribue à l'enrichissement des grains d'alumine β comme indiqué précédemment mais aussi à la formation d'une phase interstitielle.

**Tableau 8**

| N° | Na₂O (%) | SiO₂ (%) | Phase interstitielle | Alumine β' |
|---|---|---|---|---|
| 1* | 6,09 | 0,02 | non | non |
| 3* | 6,55 | 0,72 | Na₂O, Al₂O₃, SiO₂ | non |
| 25 | 7,43 | 0,68 | Na₂O, Al₂O₃, SiO₂ | oui |
| 29 | 7,57 | 0,76 | Na₂O, Al₂O₃, SiO₂ | oui |
| 40 | 8,20 | 0,10 | NaAlO₂ | oui |

La nature de la phase interstitielle dépend de la teneur en silice. En effet, en présence de silice le composé formé à la périphérie des grains d'alumine β sera un composé silico-sodo-alumineux du type Na₂O, Al₂O₃, SiO₂. La teneur de ce composé sera d'autant plus importante que la teneur en Na₂O introduit dans le produit sera importante. En absence de silice on note l'apparition d'une phase interstitielle de type aluminate de sodium NaAlO₂. La teneur de ce composé sera d'autant plus importante que la teneur en Na₂O introduit dans le produit sera importante.

La présence de ces deux types de phases interstitielles dans des proportions suffisantes peut contribuer à renforcer la cohésion des grains entre eux.

En conclusion, on peut dire que les essais réalisés montrent que les nouveaux produits conservent les propriétés fondamentales des produits d'alumine β tout en y apportant des améliorations très sensibles.

Il est à noter que, bien que la présente invention ait été plus spécialement décrite en relation à des matériaux fondus et coulés et mis en forme par moulage, elle s'étend également aux produits granulaires, réagglomérés ou non réagglomérés, obtenus par broyage ou concassage, ou par tous autres moyens, desdits matériaux.

## Revendications

1. Matériau réfractaire fondu et coulé essentiellement constitué d'alumine β, **caractérisé en ce qu'**il présente, à l'analyse, la composition chimique molaire suivante :
- 11,25% à 15,45% d'au moins un oxyde de métal alcalin choisi dans le groupe formé par Na₂O, Li₂O et K₂O avec la condition que Na₂O représente au moins 9,3%,
- 0 à 2,97% de SiO₂,
- 81,38 à 88,75% de Al₂O₃, et
- au plus 0,2% d'impuretés
et dans lequel l'alumine β représente au moins 98% des phases cristallisées.

2. Matériau selon la revendication 1, **caractérisé en ce que** l'oxyde de métal alcalin consiste essentiellement en Na₂O.

3. Matériau selon la revendication 2 **caractérisé en ce que** la composition chimique analysée du matériau est la suivante, en % en poids :
- 7,25 à 10% de Na₂O,
- 0 à 1,85% de SiO₂,
- 87,95 à 92,75% de Al₂O₃, et
- au plus 0,2% d'impuretés

4. Matériau selon la revendication 3 **caractérisé en ce que** la composition chimique analysée du matériau est la suivante, en % en poids :
- 7,3 à 8,8% de Na₂O,
- 0,4 à 1,65% de SiO₂,
- 89,35 à 92,3% de Al₂O₃, et
- au plus 0,2% d'impuretés.

5. Matériau selon la revendication 4 **caractérisé en ce que** la composition chimique analysée du matériau est la suivante, en % en poids :
- 7,4 à 8,5% de Na₂O,
- 0,7 à 1,45% de SiO₂,
- 89,85 à 91,9% de Al₂O₃, et
- au plus 0,2% d'impuretés.

6. Matériau selon l'une quelconque des revendications 1 à 5, **caractérisé en ce qu'**il est constitué de grains d'alumine β liés par une phase liante interstitielle.

7. Matériau selon la revendication 6, **caractérisé en ce que** ladite phase interstitielle est une phase du système Na₂O-Al₂O₃-SiO₂.

8. Matériau selon la revendication 6 ou 7, **caractérisé en ce que** lesdits grains comprennent de l'alumine β'.

## Patentansprüche

1. Schmelzflüssig gegossenes feuerfestes Material, das im wesentlichen aus β-Aluminiumoxid besteht, **dadurch gekennzeichnet, dass** es bei der Analyse die folgende molare chemische Zusammensetzung aufweist:
- 11,25% bis 15,45% wenigstens eines Alkalimetalioxlds; das aus der Gruppe ausgewählt ist, die aus Na₂O, Li₂O und K₂O besieht, mit der Maßgabe, dass Na₂O wenigstens 9,3% ausmacht;
- 0 bis 2,97% SiO₂;
- 81,38 bis 88,75% Al₂O₃; und
- höchstens 0,2% Verunreinigungen;
wobei das β-Aluminlumoxid wenigstens 98% der kristallisierten Phasen ausmacht.

2. Material gemäß Anspruch 1, **dadurch gekennzeichnet, dass** das Alkalimetalloxid im wesentlichen aus Na₂O besteht.

3. Material gemäß Anspruch 2, **dadurch gekennzeichnet, dass** die analysierte chemische Zusammensetzung des Materials wie folgt ist, in Gewichtsprozent:
- 7,25 bis 10% Na₂O;
- 0 bis 1,85% SiO₂;
- 87,95 bis 92,75% Al₂O₃; und ,
- höchstens 0,2% Verunreinigungen.

4. Material gemäß Anspruch 3, **dadurch gekennzeichnet, dass** die analysierte chemische Zusammensetzung des Materials wie folgt ist, in Gewichtsprozent:
- 7,3 bis 8,8% Na₂O;
- 0,4 bis 1,65% SiO₂;
- 89,35 bis 92,3% Al₂O₃; und
- höchstens 0,2% Verunreinigungen.

5. Material gemäß Anspruch 4, **dadurch gekennzeichnet, dass** die analysierte chemische Zusammensetzung des Materials wie folgt ist, in Gewichtsprozent:
- 7,4 bis 8,5% Na₂O;
- 0,7 bis 1,45% SiO₂;
- 89,85 bis 91,9% Al₂O₃; und
- höchstens 0,2% Verunreinigungen.

6. Material gemäß einem der Ansprüche 1 bis 5, **dadurch gekennzeichnet, dass** es aus Körnern von β-Aluminiumoxid besteht, die durch eine die Zwischenräume füllende Bindephase miteinander verbunden sind.

7. Material gemäß Anspruch 6, **dadurch gekennzeichnet, dass** die die Zwischenräume füllende Phase elne Phase des Systems Na₂O-Al₂O₃-SiO₂ ist.

8. Material gemäß Anspruch 6 oder 7, **dadurch gekennzeichnet, dass** die Körner β'-Aluminiumoxid umfassen.

## Claims

1. A fused cast refractory material essentially consisting of β alumina **characterised in that** it has the following chemical analysis expressed as molar percentages:
- 11.25% to 15.45% of at least one alkaline metal oxide selected from the group comprising Na₂O, Li₂O and K₂O provided that Na₂O represents at least 9.3%,
- 0 to 2.97% SiO₂,
- 81.38% to 88.75% Al₂O₃, and
- at most 0.2% impurities
and in which β alumina represents at least 98% of the crystallised phases.

2. A material according to claim 1 **characterised in that** the alkaline metal oxide consists essentially of Na₂O.

3. A material according to claim 2 **characterised in that** the chemical analysis of the material expressed as weight percentages is as follows:
- 7.25% to 10% Na₂O,
- 0 to 1.85% SiO₂,
- 87.95% to 92.75% Al₂O₃, and
- at most 0.2% impurities.

4. A material according to claim 3 **characterised in that** the chemical analysis of the material expressed as weight percentages is as follows:
- 7.3% to 8.8% Na₂O,
- 0.4% to 1.65% SiO₂,
- 89.35% to 92.3% Al₂O₃, and
- at most 0.2% impurities.

5. A material according to claim 4 **characterised in that** the chemical analysis of the material expressed as weight percentages is as follows:
- 7.4% to 8.5% Na₂O,
- 0.7% to 1.45% SiO₂,
- 89.85% to 91.9% Al₂O₃, and
- at most 0.2% impurities.

6. A material according to any of claims 1 to 5, **characterized in that** it is comprised of β alumina grains bound together by a binding interstitial phase.

7. A material according to claim 6, **characterized in that** said interstitial phase is a phase of the Na₂O-Al₂O₃-SiO₂ system.

8. A material according to claims 6 or 7, **characterized in that** said grains comprise β'-alumina.
